# EUROPÄISCHE PATENTSCHRIFT

(11) **EP 3 079 871 B1**
(45) Veröffentlichungstag und Bekanntmachung des Hinweises auf die Patenterteilung: **29.03.2023**
(21) Anmeldenummer: 14843222.2
(22) Anmeldetag: 05.12.2014
(51) Int. Cl.: B28B 1/00, B28B 7/46, C04B 37/02, B29C 64/165, B29C 64/188

(54) **3D-INFILTRATIONSVERFAHREN**
3D INFILTRATION METHOD
PROCÉDÉ D'INFILTRATION DANS DES PIÈCES EN 3D

(30) Priorität: 11.12.2013 DE 102013020491
(43) Veröffentlichungstag der Anmeldung: 19.10.2016
(73) Patentinhaber: voxeljet AG, 86316 Friedberg (DE)
(72) Erfinder: GÜNTHER, Daniel, 81317 München (DE)
(74) Vertreter: Hoefer & Partner Patentanwälte mbB
(86) Internationale Anmeldenummer: PCT/DE2014/000621
(87) Internationale Veröffentlichungsnummer: WO 2015/085983

(56) Entgegenhaltungen:
- DE-A1-102011 105 688
- US-A1- 2008 187 711

## Beschreibung

Die Erfindung betrifft ein Verfahren zum Herstellen verfestigter dreidimensionaler Bauteile sowie ein Materialsystem geeignet für ein 3D-Druckverfahren.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt (Bauteil, Formkörper, 3D-Formteil).

In der DE 10 2011 105688A1 wird ein Verfahren zum schichtweisen Aufbau von Modellen beschrieben, wobei in einem Baubereich ein partikelförmiges Material schichtweise aufgetragen und selektiv gehärtet wird. Diese Schritte werden wiederholt, bis ein gewünschtes Modell erhalten wird. Das Material umfasst dabei ein partikelförmiges Baumaterial und eine sprühgetrocknete Alkalisilikatlösung. Ein selektives

Aktivieren der Härtung erfolgt mittels einer Wasser umfassenden Lösung.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann von Pulveranhaftungen z.B. durch händisches Abbürsten befreit werden.

Das 3D-Drucken auf Basis pulverförmiger Werkstoffe und Eintrag flüssiger Binder ist unter den Schichtbautechniken das schnellste Verfahren.

Mit diesem Verfahren lassen sich verschiedene Partikelmaterialien, dazu zählen - nicht erschöpfend - natürliche biologische Rohstoffe, polymere Kunststoffe, Metalle, Keramiken und Sande, verarbeiten.

Bauteile, die mit den oben beschriebenen Verfahren hergestellt werden, zeigen jedoch den Nachteil, dass sie eine poröse Struktur aufweisen und keinen festen geschlossenen Körper bilden. Die Porosität wird durch den Bauprozess bedingt und ist beispielsweise im Bereich der zementgebundenen Werkstoffe nicht zu vermeiden. Die Porosität hat nicht n ur Nachteile hinsichtlich der Stabilität und Festigkeit der Bauteile, sondern birgt auch zahlreiche Nachteile bei der Langzeitverwendung derartiger Bauteile. Insbesondere beim Einsatz solcher Bauteile im im Außenbereich ist eine Langzeithaltbarkeit nicht gewährleistet und es kann durch verschiedene Einflüsse zu Materialermüdungen bzw. Beschädigungen kommen.

Zementbasierte Werkstoffe sind im Bauwesen weit verbreitet. Auf diesem technischen Gebiet ist die Herstellung von Bauteilen über 3D-Druckverfahren unter zahlreichen Aspekten wie Wirtschaftlichkeit, Zeitersparnis und der Vielfalt der möglichen Formgebung der Bauteile besonders interessant.

Allerdings ist der Einsatz von mit 3D-Druckverfahren hergestellten Bauteilen in vielen Bereichen problematisch, da aufgrund der Porosität der Bauteile Probleme bei der Langzeitverbauung zu erwarten sind und nachgewiesener Maßen auftreten.

Zum einen kann in den mit 3D-Druckverfahren hergestellten Bauteilen Frostsprengung auftreten und so die Bauteile beschädigen oder zerstören. Eindringendes Wasser erzeugt beim Frieren im Winter hohe Druckkräfte und sprengt das 3D-Zementbauteil auseinander. Somit würde ein 3D-gedrucktes Bauteil in Gegenden mit einer Frostperiode kein Jahr überdauern.

Zum Zweiten weist ein 3D-Bauteil aufgrund seiner Porosität eine sehr große Oberfläche auf. Diese Oberfläche ist im Außenbereich nach Regenfällen lange mit Wasser benetzt. Dieser Umstand wird gefördert durch die Tatsache, dass der überwiegende Teil der Oberfläche im Inneren des Bauteils, der somit selbst bei Sonneneinstrahlung nur langsam abtrocknet. Dieser Umstand fördert einen Bewuchs mit Moosen und Pilzen, wodurch das Bauteil schnell geschädigt und zersetzt wird.

Ferner haben mit der 3D-Drucktechnik hergestellte Bauteile aufgrund ihrer Porosität im Vergleich zu konventionell gegossenen Bauteilen eine niedrigere Festigkeit. Damit ist aufgrund der verminderten Festigkeit eine Grenze hinsichtlich deren Einsatz im Bauwesen gesetzt und ihr Einsatz an und für sich schon problematisch. Selbst Bauteile mit niedriger Beanspruchung müssen gewissen sicherheitstechnischen Anforderungen genügen, was mit 3D-Druckbauteilen nicht gesichert ist.

Nach dem Stand der Technik sind Methoden bekannt, die Festigkeit von 3D-gedruckten Bauteilen zu steigern. Dabei werden Polymere verwendet, die in das poröse Bauteil einsickern und dort verfestigen.

Diese Polymere können die Festigkeit von 3D-Bauteilen steigern. Das Auftragen einer ZweiKomponenten-Mischung ist allerdings aufwändig und im 3D-Druckbereich und mit diesen Verfahren hergestellten Bauteilen nicht praktikabel. Ein automatisiertes Verfahren zur Verfestigung derart hergestellter Bauteile ist nach dem Stand der Technik nicht bekannt. Eine weitere bekannte Methode zum Verfestigen von 3D-Bauteilen ist diese mit anorganischen Bindemitteln zu infiltrieren. Die Bindemittel müssen aber zur Verfestigung abtrocknen. Da sich meist auf der Oberfläche eine verfestigte Haut bildet ist der Verfestigungsvorgang oft verzögert bzw. es kommt in keiner "endlichen" Zeitspanne zu einer Verfestigung.

Gleiches gilt für Polymerdispersionen. Hier ist der Effekt der "Hautbildung" besonders ausgeprägt und damit nachteilig für deren Anwendung. Die ungünstigen Trockenzeiten hier sind ebenso sehr hinderlich.

US 2008/187711 A1 offenbart ein Verfahren zum Herstellen dreidimensionaler Bauteile mittels Schichtaufbautechnik, wobei in einem ersten Verfahrensschritt Materialschichten des oder der Bauteile mit bekannten Schichtaufbauverfahren aufgetragen werden und verfestigt werden, die verfestigten Bereiche zumindest teilweise Poren aufweisen, und in einem zweiten Verfahrensschritt zum Verfestigen das oder die Bauteile mit einem Medium in Kontakt gebracht werden.

Es besteht somit schon lange das Bedürfnis für ein einfaches, wirtschaftliches und gegebenenfalls automatisierbares Verfahren zur Verfestigung von 3D-Druckbauteilen.

Es ist daher eine Aufgabe der Erfindung ein Verfahren zur Verfestigung bereitzustellen oder zumindest ein Verfahren, das die Nachteile des Standes der Technik vermeidet oder zumindest teilweise vermeidet.

### Kurze Beschreibung der Erfindung

In einem Aspekt betrifft die Erfindung ein Verfahren zum Herstellen verfestigter 3D-Bauteile, wobei das Bauteil mit bekannten 3D-Druckverfahren hergestellt werden können und das Verfahren so modifiziert und in Verfahrensschritten ergänzt wird, dass Material wirksam in die Poren des Bauteils eingebracht und die Festigkeit des Bauteil deutlich erhöht.

### Ausführliche Beschreibung der Erfindung

Im Folgenden werden einige Begriffe der Erfindung näher erläutert, die im Kontext der Erfindung wie im Folgenden verstanden werden sollen.

Im Sinne der Erfindung sind "3D-Druckverfahren" alle aus dem Stand der Technik bekannten Verfahren, die den Aufbau von Bauteilen in dreidimensionalen Formen ermöglichen und mit den beschriebenen Verfahrenskomponenten und Vorrichtungen kompatibel sind. Insbesondere sind dies Pulver-basierte Verfahren, wie beispielsweise SLS (Selective Laser Sintering).

"Binder" im Sinne der Erfindung für den ersten Verfahrensschritt kann jeder mit dem Schichtaufbaumaterial kompatibler Binder sein, z.B. wasserbasierter Binder, organischer oder anorganischer Binder sein, die dem Fachmann bekannt sind und somit hier nicht im Detail beschrieben werden müssen. Beispiele sind Polyphor B und Polyphor C etc.

"Selektiver Binderauftrag" oder "Selektiver Bindersystemauftrag" kann im Sinne der Erfindung nach jedem Partikelmaterialauftrag erfolgen oder je nach den Erfordernissen des Formkörpers und zur Optimierung der Formkörperherstellung auch unregelmäßig erfolgen, d.h. nicht linear und parallel nach jedem Partikelmaterialauftrag. "Selektiver Binderauftrag" oder "Selektiver Bindersystemauftrag" kann somit individuell und im Verlauf der Formkörperherstellung eingestellt werden.

"Formkörper" oder "Bauteil" im Sinne der Erfindung sind alles mittels des erfindungsgemäßen Verfahrens oder/und der erfindungsgemäßen Vorrichtung hergestellte dreidimensionale Objekte, die eine Formfestigkeit aufweisen.

Als "Vorrichtung" zum Durchführen des erfindungsgemäßen Verfahrens kann jede bekannte 3D-Druckvorrichtung verwendet werden, die die erforderlichen Komponenten beinhaltet. Übliche Komponenten sind Beschichter, Baufeld, Mittel zum Verfahren des Baufeldes oder anderer Bauteile, Dosiervorrichtung und Wärmemittel und andere dem Fachmann bekannte Bauteile, die deshalb hier nicht näher ausgeführt werden.

Als "Partikelmaterialien" können alle für den Pulver-basierten 3D Druck bekannten Materialien verwendet werden, insbesondere Sande, Keramikpulver, Metallpulver, Kunststoffe, Holzpartikel, Faserwerkstoffe, Cellulosen oder/und Lactosepulver. Das Partikelmaterial ist vorzugsweise ein trocken, frei fließendes und ein kohäsives schnittfestes Pulver.

Ein "hydraulisch abbindendes Bindemittel" stellt ein Materialsystem dar, das bei einem gewissen Wasserverbrauch von einem wasserlöslichen in einen wasserunlöslichen Zustand übergeht. Dabei wird das Wasser in den festen Werkstoff fest "eingebaut".

"Zement" im Sinne der Erfindung bezeichnet im Allgemeinen ein feines Pulver, das benutzt wird im Partikel oder Körner miteinander zu verkleben. Das Verkleben kommt durch kristalline Fasern zustande, die bei Wasserzugabe aus den Zementkörnern wachsen und sich durchdringen und dabei gewissermaßen verfilzen.

Der Zement muss im Bauteil "teilweise" hydratisiert vorliegen. Das bedeutet, dass beim Druckprozess wenig Wasser auf den Zement gegeben wird. Diese Menge wird experimentell an die erforderliche Grünfestigkeit angepasst.

"Grünfestigkeit" wird im Sinne der Erfindung definiert als Festigkeit mit der Bauteile aus dem losen Pulver sicher entpackt werden können und sich auch in den Folgeprozessen nicht oder nicht relevant geometrisch verändern.

Ergebnis des 3D-Druckprozesses ist im Allgemeinen ein "poröser Körper". Die Porosität wird in vielen Fällen nicht während des Druckprozesses aufgefüllt, da hierdurch Effekte (z.B. massiver Schwund) auftreten, die die Genauigkeit der Bauteile beeinflussen.

Im Weiteren wird die Erfindung sowie deren bevorzugte Ausführungsformen genauer dargestellt.

Im allgemeinen betrifft die Erfindung ein Verfahren zum Herstellen eines Bauteils (3D-Formkörper), wobei (a) in einem ersten Schritt mittels Pulverbeschichter (101) eine Partikelschicht auf eine Bauplattform (102) aufgebracht wird, (b) in einem zweiten Schritt mittels Binder-Dosiervorrichtung (100) ein Binder (400) selektiv aufgetragen wird, (c) in einem weiteren Schritt die aufgebrachte Schicht oder Schichten mittels Wärmequelle (600) einer Wärmebehandlung unterzogen werden, (d) die Bauplattform (102) abgesenkt wird oder der Pulverbeschichter (101) und gegebenenfalls weitere Vorrichtungsbauteile um eine Schichtdicke angehoben wird, Schritte (a) bis (d) wiederholt werden bis das Bauteil aufgebaut ist.

Die der Anmeldung zugrunde liegende Aufgabe wird gelöst durch ein Verfahren zum Herstellen dreidimensionaler Bauteile mittels Schichtaufbautechnik, wobei in einem ersten Verfahrensschritt Materialschichten des oder der Bauteile mit bekannten Schichtaufbauverfahren aufgetragen werden und zumindest teilweise verfestigt werden, die verfestigten Bereiche zumindest teilweise Poren aufweisen, und in einem zweiten Verfahrensschritt zum weiteren Verfestigen das oder die Bauteile mit einem Wasser enthaltenden Medium in Kontakt gebracht werden, wobei zum Aufbauen der Materialschichten partikuläres Material verwendet wird, das aus einem Material besteht oder es enthält, welches durch Eintrag einer wässrigen Flüssigkeit verfestigt, wobei in dem zum Aufbauen der Materialschichten verwendete partikuläre Material für den ersten Verfahrensschritt ein hydraulisch abbindendes Material ist, nämlich ein Zement oder ein Gips, und wobei das in dem zweiten Verfahrensschritt verwendete Wasser enthaltende Medium ein Wasserglas oder eine wasserbasierte Kunststoffdispersion ist, das in die Poren des Bauteils infiltriert.

Insbesondere betrifft die Offenbarung ein Verfahren zum Herstellen dreidimensionaler Bauteile mittels Schichtaufbautechnik, wobei in einem ersten Verfahrensschritt Materialschichten des oder der Bauteile mit bekannten Schichtaufbauverfahren aufgetragen werden und zumindest teilweise verfestigt werden, die verfestigten Bereiche zumindest teilweise Poren aufweisen, und in einem zweiten Verfahrensschritt das oder die Bauteile mit einem Wasser enthaltenden Medium in Kontakt gebracht werden, und wobei zum Aufbauen der Materialschichten partikuläres Material verwendet wird, das aus einem Material besteht oder es enthält, welches durch Eintrag einer wässrigen Flüssigkeit abbindet oder verfestigt.

Vorzugsweise wird auf die Materialschichten auf selektive Bereiche ein Binder aufgetragen und diese Bereiche werden durch das Auftragen des Binders selektiv verfestigt. Dabei kann ein Wasser enthaltender Binder verwendet werden oder jeglicher anderer mit dem verwendeten Material für den Schichtaufbau kompatibler Binder. Dabei sind verschiedene Bindertypen oder Binderklassen denkbar, die dann mit dem zweiten Verfahrensschritt kombinierbar sind.

Ein Kern der Erfindung ist dabei die Bereitstellung eines porösen Formkörpers aus einem Werkstoff mit hydraulisch abbindendem Bindemittel mit einer Zusammensetzung, die eine unvollständige Hydratation des Bindemittels darstellt. Der Formkörper weist nach dem ersten Herstellungsschritt eine zum Entpacken ausreichende Festigkeit auf. Im Anschluss wird der Formkörper gemäß dieser Erfindung mit einem durch Trocknung härtenden, wasserbasierten Infiltrat behandelt und die Trocknung des Infiltrats im Inneren über den weiteren Wasserbedarf des hydraulischen Bindemittels realisiert.

Die Erfinder haben nun überraschender Weise gefunden, dass in Systemen, die hydraulisch abbindende Werkstoffe verwenden, ein synergistischer Effekt zwischen Partikelmaterial, das zum Aufbau der Schichten verwendet wird, und einem Infiltrat erreicht werden kann, das zum Verfestigen oder/und Trocknen Wasser abgibt. Dabei werden die Materialien und Mengen so gewählt, dass im 3D-Druckprozess in einem ersten Verfahrensschritt die Wassermenge des Binders so gewählt wird, dass eine ausreichende Grundfestigkeit des Formteils erreicht wird, um dieses z.B. zu entpacken. Andererseits wird das Material und die Menge des Materials zum Infiltrieren der Poren so ausgewählt - und insbesondere dessen Wassergehalt - , dass das den Formkörper aufbauende Material genug Wasseraufnahmekapazität aufweist, um das Infiltrat zu verfestigen durch Wasserabgabe. Gleichzeitig dient diese Wassermenge genau dazu, um das Partikelmaterial des Formkörpers weiter zu verfestigen.

Es war überraschend, dass ein Verfahren bereitgestellt werden konnte, das so kombiniert werden kann, dass sich die Wasserabgabe und Wasseraufnahmekapazitäten derart entsprechen, dass es in beiden Materialtypen zu einer vorteilhaften Verfestigung kommen kann.

Darüber hinaus zeigen derart hergestellt Formteile vorzügliche Materialeigenschaften hinsichtlich z.B. Ihrer Festigkeit. Auch können mit dem erfindungsgemäßen Verfahren formgenaue und abbildungsgenaue Formteile hergestellt werden.

Der Bauprozess wird erfindungsgemäß und vorzugsweise mit einem wasserbasiertem Druckmedium durchgeführt. Dieses darf keine die Abbindung des hydraulisch abbindenden Bindemittels behindernde Substanzen aufweisen. Das hydraulisch abbindende Bindemittel kann in seiner Zusammensetzung an die Erfordernisse des Mediums angepasst werden.

Die selektive Verfestigung wird mit einer zu einer vollständigen Abbindung des hydraulisch abbindenden Bindemittels nicht ausreichenden Wassermenge durchgeführt.

Im Anschluss an den Druckprozess werden die im losen Pulver befindlichen Teile einer Ruhezeit ausgesetzt. Diese ist notwendig, um eine geeignete Grünfestigkeit zu erreichen. Der Baukörper ändert während dieser Phase nicht nur die Eigenschaft Festigkeit, sondern der Körper wird zudem wasserunlöslich.

Im Anschluss an die Ruhezeit wird der Körper aus dem Partikelmaterial entpackt. Daraufhin werden anhaftende Pulvermengen entfernt. Dies kann mit einer Bürste erfolgen. Ebenso bewährt sind das Abblasen mit Druckluft und das Strahlen mit Partikelmaterial.

Hierauf kann sich eine weitere Trocknungsphase anschließen. Dabei wird noch verbleibendes Restwasser ausgetrieben, damit es nicht zur Hydratisierung zur Verfügung steht.

Nach dem Trocknen des Bauteils erfolgt die Infiltration mit einem durch Trocknung abbindenden Infiltrat. Hierzu kann der Körper beispielsweise mit Wasserglas bepinselt oder besprüht werden. Ebenso ist ein Tauchen des Bauteil in ein Bad mit dem Inflitrat möglich. Dabei sind auch mehrere Durchgänge möglich. Für die Infiltration eigenen sich ebenso bevorzugt wässrige Polymerdispersionen.

Überraschender Weise wurde entdeckt, dass sich durch einen Überschuss an nicht hydratisiertem Zement der Trocknungsprozess maßgeblich beeinflussen lässt. Körper die vollständig abgebunden sind, zeigen ein wesentlich langsameres Abtrocknen.

Die Verfestigung des Infiltrates erfolgt im Allgemeinen schon beim Abtrocknen. Bei Wasserglas tritt sowohl eine physikalische Verfestigung als auch eine chemische Reaktion im Sinne einer Polymerisation auf. Dieser Prozess kann zusätzlich durch Wärme und Luftbewegung von außen unterstützt werden.

Ebenso kann die Randschicht durch das begasen mit CO₂ beeinflusst werden. Auf diese Weise wird die chemische Reaktion der Verfestigung beschleunigt.

Weitere bevorzugte Ausführungsformen der Erfindung sind wie folgt:
In dem erfindungsgemäßen Verfahren ist das zum Aufbauen der Materialschichten verwendete partikuläre Material ein hydraulisch abbindendes Material, nämlich ein Zement oder ein Gips.

Das Wasser enthaltende Medium ist ein Wasserglas oder eine wasserbasierte Kunststoffdispersion, vorzugsweise eine wässrige Lösung von Natronwasserglas, Kaliwasserglas oder Lithiumwasserglas.

Die Infiltration kann teilweise oder vollständig erfolgen, oder nur die Oberfläche der Poren im wesentlichen bedecken. Vorzugsweise beschichtet das Wasser enthaltende Medium das Bauteil außen und vorzugsweise die Oberflächen der Poren, mehr bevorzugt füllt es die Poren im Wesentlichen aus.

Dabei wird die Menge des das Wasser enthaltende Medium so ausgewählt, dass diese ausreicht, um das zum Aufbauen der Materialschichten verwendete partikuläre Material im wesentlichen vollständig abzubinden und zu verfestigen.

Es können mit dem erfindungsgemäßen Verfahren Formteile hergestellt werden, die einen unterschiedlichen Grad der Festigkeit und Löslichkeit aufweisen, vorzugsweise sind die Formteile und das sie aufbauende partikuläre Material nach dem Abbinden im wesentlichen nicht mehr wasserlöslich.

Weiterhin kann das das Wasser enthaltende Medium weitere Bestandteile enthalten, die zu vorteilhaften Eigenschaften des Formteils beitragen. Vorzugsweise enthält es Polymere.

Es kann sich ein weitere oder alternativer Verfahrensschritt anschließen, wobei das oder die Bauteile mit einem weiteren Material oder Materialgemisch behandelt werden, um die Poren im wesentlichen auszufüllen.

Vorzugsweise lässt man die Formteile nach dem ersten Verfahrensschritt ruhen, wobei vorzugsweise die in dem ersten Verfahrensschritt hergestellten Bauteile vor dem zweiten Verfahrensschritt mindestens 12 Stunden lang, vorzugsweise 24 Stunden lang, ausgelagert werden.

Das hydraulisch abbindende Material wird an die anderen Materialkomponenten angepasst in Menge, Zusammenmischung, etc. Vorzugsweise liegt ein Überschuss an hydraulisch abbindendem Material in dem oder den Bauteilen vor dem zweiten Verfahrensschritt vor. Das Wasser enthaltende Medium kann mit allen geeigneten Mitteln aufgebracht werden. Vorzugsweise werden das oder die Bauteile mit einem Pinsel mit dem Wasser enthaltenden Medium eingestrichen, besprüht oder in dieses eingetaucht.

Es können vorzugsweise weitere Behandlungsschritte oder Mittel angewendet werden.

Vorzugsweise werden das oder die Bauteile nach dem zweiten Verfahrensschritt zusätzlich mit Wärme und/oder Luftwechsel behandelt. Außerdem kann das oder die Bauteile einer Begasung, vorzugsweise mit CO₂ , unterzogen werden.

Das Verfahren kann so gestaltet werden, dass im zweiten Verfahrenschritt eine Reihe von aufeinander folgenden Schritten mit unterschiedlichen Materialien erfolgt, die geeignet sind, das partikuläre Material zu verfestigen oder/und die Poren im wesentlichen auszufüllen.

### Kurze Beschreibung der Figuren:

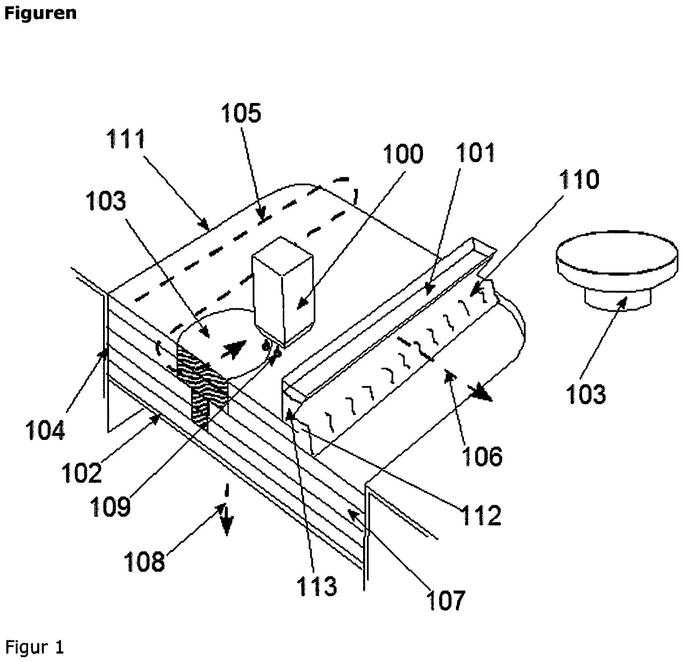

*Figur 1*: Schematische Darstellung der Komponenten eines pulverbasierten 3D-Druckers als geschnittener Schrägriss.

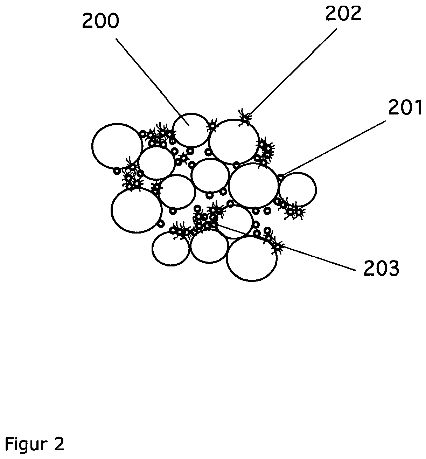

*Figur 2*: Schematische Darstellung eines porösen Körpers mit nicht oder nur teilweise hydratisierten Zementpartikeln.

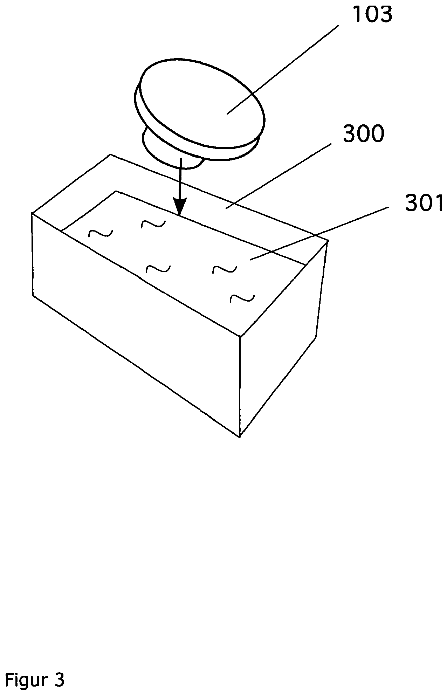

Figur 3: Tauchbad mit Wasserglas

Weitere Details und eine bespielhafte bevorzugte Ausführungsform des Verfahrens werden im Folgenden ausgeführt.

### Beispiel

### Herstellen eines Formteils mit dem erfindungsgemäßen Verfahren

Im ersten Schritt wird ein Partikelmaterial in einer dünnen Schicht auf eine Bauplattform aufgetragen. Das Partikelmaterial besteht in dieser bevorzugten Ausführungsform aus Quarzsand (200) mit einem Mittelkorn von 140µm. Dieser Sand wird vor der Anwendung getrocknet bis die Restfeuchte weniger als 0,3 Gew.-% beträgt. Diesem Sandgemisch wird eine dem Porenraum angepasste Zementkornmischung (201) beigegeben. Dieser Zement kann in seiner Reaktionsfähigkeit angepasst werden. Die Schichtstärke bei diesem Prozess beträgt 0,25mm.

Zur Modifikation der Fließfähigkeit des Partikelgemisches wird zusätzlich ein Anteil von 0,5 Gew-%. pyrogene Kieselsäure beigegeben. Der Zement kann beispielweise ein Calziumaluminatzement des Typs CA270 von Almatis oder ein alpha-Bond 300 von Almatis sein.

Die Bindeflüssigkeit enthält ein Silikat, um die Verdruckbarkeit einzustellen. Dieses ist in einer wässrigen Lösung vorliegend. Zusätzlich werden Tenside Surfynol 440 genutzt, um die Flüssigkeit für Tintenstrahldruckköpfe weiter zu optimieren.

Insgesamt werden im Bauprozess bezogen auf die Partikelmaterialmenge 20 Gew.-% Flüssigbinder zugesetzt. Der Zement "leidet" an Wassermangel und härtet (203) dadurch nur partiell aus.

Nach dem Drucken ruht der Bauprozess und das Formteil ruht 24 Std. im Pulver. Dabei werden keine besonderen Maßnahmen zur Belüftung getroffen. Aufgrund von Diffusionseffekten in das die Bauteile umgebende Pulver trocknet der Zement weiter ab. Dies ist wiederum nützlich für die teilweise Hydratation.

Das Auspacken muss vorsichtig erfolgen, da der Baukörper nur die Grünfestigkeit aufweist. Anhaftungen werden in einem ersten Schritt mit einer harten Bürste entfernt. Danach wird das Bauteil (103) mit Sand vorsichtig gestrahlt.

Dieses Teil (103) wird wiederum 24 Std. in einem Umluftofen bei 40°C getrocknet. Dadurch wird die Restfeuchte weiter gesenkt.

Nach diesem Schritt erfolgt die Infiltration. Als Infiltrat (300) kann beispielsweise Kaliwasserglas 28/30 verwendet werden. Dies kann durch einen Pinsel aufgebracht werden. Das Eindringverhalten kann durch ein Vorwärmen der Form verbessert werden. Ebenso gut kann das Bauteil (103) aber auch in ein Bad (301) mit dem Infiltrat getaucht werden, da der teilhydratisierte Zement nicht wasserlöslich ist.

Dieser Vorgang wird direkt so oft wiederholt, bis das Infiltrat wieder aus dem Bauteil (103) tritt. Dadurch kann die festigkeitssteigernde Wirkung verstärkt werden.

Das so behandelte Bauteil (103) wird einen weiteren Tag an der Luft ausgelagert. Die Festigkeit ist jetzt stark angestiegen. Die Trocknung ist zum großen Teil durch nachträgliches Hydratisieren des Zementes erfolgt. Dieser Prozess kann durch Wärme beschleunigt werden. Die Verfestigung der Oberfläche kann durch Luftzug beschleunigt werden. Erfindungsgemäß ist das Bauteil (103) jetzt verfestigt und verdichtet. Jetzt können in einfacher Weise weitere Schichten mit Infiltrationsmaterial zur vollständigen Abdichtung oder Dekoration aufgebracht werden. Dies können Wasserglasschichten sein, die in dünnen Schichten rasch aushärten. Zudem können aber auch Polymere verwendet werden, die für den Außenbereich optimiert sind.

### Bezugszeichenliste

- 100: Binder-Dosiervorrichtung
- 101: Pulverbeschichter
- 102: Bauplattform
- 103: Bauteil (3D Formteil)
- 104: Baufeldberandung
- 107: Pulverschichten
- 200: Sandpartikel
- 201: Zement nicht hydratisiert
- 202: hydratisierter Zement
- 203: verfestigter Bereich
- 300: Tauchbad
- 301: Infiltrat

## Patentansprüche

1. Verfahren zum Herstellen dreidimensionaler Bauteile mittels Schichtaufbautechnik, wobei in einem ersten Verfahrensschritt Materialschichten des oder der Bauteile mit bekannten Schichtaufbauverfahren aufgetragen werden und zumindest teilweise verfestigt werden, die verfestigten Bereiche zumindest teilweise Poren aufweisen, und in einem zweiten Verfahrensschritt zum weiteren Verfestigen das oder die Bauteile mit einem Wasser enthaltenden Medium in Kontakt gebracht werden, wobei zum Aufbauen der Materialschichten partikuläres Material verwendet wird, das aus einem Material besteht oder es enthält, welches durch Eintrag einer wässrigen Flüssigkeit verfestigt, wobei in dem zum Aufbauen der Materialschichten verwendete partikuläre Material für den ersten Verfahrensschritt ein hydraulisch abbindendes Material ist, nämlich ein Zement oder ein Gips, und wobei das in dem zweiten Verfahrensschritt verwendete Wasser enthaltende Medium ein Wasserglas oder eine wasserbasierte Kunststoffdispersion ist, das in die Poren des Bauteils infiltriert.

2. Verfahren nach Anspruch 1, wobei das Wasserglas eine wässrige Lösung von Natronwasserglas, Kaliwasserglas oder Lithiumwasserglas ist, vorzugsweise wobei das partikuläre Material Sand, Quarzsand, Gesteinsmehl oder andere anorganische Materialien umfasst,
vorzugsweise
wobei die Menge des das Wasser enthaltende Medium so ausgewählt wird, dass diese ausreicht, um das zum Aufbauen der Materialschichten verwendete partikuläre Material im Wesentlichen vollständig abzubinden und zu verfestigen, vorzugsweise
wobei das partikuläre Material nach dem Abbinden im Wesentlichen nicht mehr wasserlöslich ist, vorzugsweise
wobei das Wasser enthaltende Medium weitere Bestandteile, vorzugsweise Polymere enthält.

3. Verfahren nach einem der vorhergehenden Ansprüche, wobei in einem weiteren Verfahrensschritt das oder die Bauteile mit einem weiteren Material oder Materialgemisch behandelt werden, um die Poren im Wesentlichen auszufüllen.

4. Verfahren nach einem der vorhergehenden Ansprüche, wobei das oder die in dem ersten Verfahrensschritt hergestellten Bauteile vor dem zweiten Verfahrensschritt mindestens 12 Stunden, vorzugsweise 24 Stunden, lang ausgelagert werden.

5. Verfahren nach einem der vorhergehenden Ansprüche, wobei ein Überschuss an hydraulisch abbindendem Material in dem oder den Bauteilen vor dem zweiten Verfahrensschritt vorliegt.

6. Verfahren nach einem der vorhergehenden Ansprüche, wobei der oder die Bauteile mit einem Pinsel mit dem Wasser enthaltenden Medium eingestrichen, besprüht oder in dieses eingetaucht werden, vorzugsweise wobei das oder die Bauteile nach dem zweiten Verfahrensschritt zusätzlich mit Wärme und/oder Luftwechsel behandelt werden, vorzugsweise wobei das oder die Bauteile einer Begasung mit CO₂ unterzogen werden.

7. Verfahren nach einem der vorhergehenden Ansprüche, **dadurch gekennzeichnet, dass** im zweiten Verfahrenschritt eine Reihe von aufeinander folgenden Schritten mit unterschiedlichen Materialien erfolgt, die geeignet sind das partikuläre Material zu verfestigen oder/und die Poren im Wesentlichen auszufüllen.

## Claims

1. A method for producing three-dimensional parts by means of layering technology, wherein, in a first process step, material layers of the part or parts are applied using known layering methods and are at least partially solidified, at least some of the solidified regions having pores, and, in a second process step, for further solidification, the part or parts are brought into contact with a medium containing water, using particulate material to build up the material layers, the particulate material consisting of or containing a material which solidifies by introduction of an aqueous liquid, wherein the particulate material used for building up the material layers for the first process step contains a hydraulically setting material, namely a cement or a gypsum, and wherein the water-containing medium used in the second process step is a water glass or a water-based plastics dispersion which infiltrates into the pores of the part.

2. The method according to claim 1, wherein the water glass is an aqueous solution of sodium water glass, potassium water glass or lithium water glass, preferably wherein the particulate material comprises sand, quartz sand, rock flour or other inorganic materials,
preferably
wherein the amount of the medium containing the water is selected to be sufficient to substantially completely set and solidify the particulate material used to build up the layers of material, preferably
wherein the particulate material is substantially no longer water-soluble after setting, preferably
wherein the water-containing medium contains further constituents, preferably polymers.

3. The method according to any one of the preceding claims, wherein in a further process step the part or parts are treated with a further material or mixture of materials to substantially fill the pores.

4. The method according to any one of the preceding claims, wherein the part or parts produced in the first process step are stored for at least 12 hours, preferably 24 hours, prior to the second process step.

5. The method according to any one of the preceding claims, wherein an excess of hydraulically setting material is present in the part or parts prior to the second process step.

6. The method according to any one of the preceding claims, wherein the part(s) is/are brushed with, sprayed with or immersed in the water-containing medium, preferably wherein the part(s) is/are additionally treated with heat and/or air exchange after the second process step, preferably wherein the part(s) is/are subjected to gassing with CO₂.

7. The method according to one of the preceding claims, **characterised in that** in the second process step a series of successive steps is carried out with different materials suitable to solidify the particulate material or/and to substantially fill the pores.

## Revendications

1. Procédé de fabrication de composants tridimensionnels au moyen d'une technique de construction couche par couche, dans lequel, dans une première étape de procédé, des couches de matériau du ou des composants sont appliquées par des procédés de construction couche par couche connus et sont au moins partiellement solidifiées, les zones solidifiées présentent au moins partiellement des pores, et dans une deuxième étape de procédé, pour la poursuite de la solidification, le ou les composants sont mis en contact avec un milieu contenant de l'eau, dans lequel, pour la constitution des couches de matériau, on utilise un matériau particulaire, qui consiste en ou contient un matériau qui se solidifie par l'introduction d'un liquide aqueux, dans lequel, dans le matériau particulaire utilisé pour la constitution des couches de matériau pour la première étape du procédé, il s'agit d'un matériau à prise hydraulique, à savoir un ciment ou un plâtre, et dans lequel le milieu contenant de l'eau utilisé dans la deuxième étape du procédé est un verre soluble ou une dispersion de matière plastique à base d'eau qui s'infiltre dans les pores du composant.

2. Procédé selon la revendication 1, dans lequel le verre soluble est une solution aqueuse de silicate de soude, de silicate de potasse ou de silicate de lithium, de préférence dans lequel le matériau particulaire comprend du sable, du sable de quartz, de la poudre de roche ou d'autres matériaux inorganiques,
de préférence
dans lequel la quantité de milieu contenant de l'eau est choisie de manière à être suffisante pour faire prendre et solidifier sensiblement complètement le matériau particulaire utilisé pour construire les couches de matériau, de préférence dans lequel le matériau particulaire n'est pratiquement plus soluble dans l'eau après la prise, de préférence
dans lequel le milieu contenant de l'eau contient d'autres composants, de préférence des polymères.

3. Procédé selon l'une quelconque des revendications précédentes, dans lequel, dans une autre étape du procédé, le ou les composants sont traités avec un autre matériau ou un mélange de matériaux afin de remplir sensiblement les pores.

4. Procédé selon l'une quelconque des revendications précédentes, dans lequel le ou les composants fabriqués lors de la première étape du procédé sont stockés pendant au moins 12 heures, de préférence 24 heures, avant la deuxième étape du procédé.

5. Procédé selon l'une quelconque des revendications précédentes, dans lequel un excès de matériau à prise hydraulique est présent dans le ou les composants avant la deuxième étape du procédé.

6. Procédé selon l'une quelconque des revendications précédentes, dans lequel le ou les composants sont enduits, à l'aide d'un pinceau, avec le milieu contenant de l'eau, pulvérisés avec celui-ci ou plongés dans le milieu contenant de l'eau, de préférence dans lequel le ou les composants sont en outre traités par la chaleur et/ou par un renouvellement d'air après la deuxième étape du procédé, de préférence dans lequel le ou les composants sont soumis à un gazage avec du CO₂.

7. Procédé selon l'une quelconque des revendications précédentes, **caractérisé en ce que**, dans la deuxième étape du procédé, on effectue une série d'étapes successives avec des matériaux différents qui sont aptes à solidifier le matériau particulaire ou/et à remplir sensiblement les pores.
